# EUROPÄISCHE PATENTSCHRIFT

(11) **EP 0 377 460 B1**
(45) Veröffentlichungstag und Bekanntmachung des Hinweises auf die Patenterteilung: **06.04.1994**
(21) Anmeldenummer: 90100142.0
(22) Anmeldetag: 04.01.1990
(51) Int. Cl.: E01C 5/06, E01C 5/00

(54) **Bausatz aus (Beton-)Formsteinen**
Set of concrete paving blocks
Ensemble de construction constitué par des pavés en béton

(30) Priorität: 05.01.1989 DE 8900109 U; 18.02.1989 DE 8901920 U
(43) Veröffentlichungstag der Anmeldung: 11.07.1990
(73) Patentinhaber: SF-Kooperation GmbH Beton-Konzepte, D-28717 Bremen (DE)
(72) Erfinder: Hagenah, Gerhard, D-2862 Worpswede (DE)
(74) Vertreter: Möller, Friedrich, Dipl.-Ing.

(56) Entgegenhaltungen:
- DE-A- 2 519 225
- DE-A- 3 300 098
- DE-A- 3 303 225
- DE-A- 3 641 373
- DE-A- 3 703 368
- DE-U- 8 705 004
- DE-U- 8 809 820
- FR-A- 2 551 783

## Beschreibung

Die Erfindung betrifft einen Bausatz aus blockförmigen Formsteinen zum Erstellen einer Erdreichabdeckung, wobei die Formsteine im Grundriß rechteckig oder quadratisch ausgebildet und durch vier senkrechte Seitenflächen begrenzt sind, an allen Seitenflächen rippenförmig ausgebildete, aufrechte Abstandsnoppen angeordnet sind, die eine etwa gleiche Dicke als Tiefe zu den Seitenflächen aufweisen, so daß sämtliche Abstandsnoppen gegenüber den Seitenflächen im wesentlichen gleich weit vorstehen, und je zwei Seitenflächen hinsichtlich Anzahl und Relativstellung der Abstandsnoppen, nämlich des Abstands derselben von einer gedachten, aufrechten Mittellinie der jeweiligen Seitenflächen, übereinstimmend ausgebildet sind.

Durch die DE-U-8 705 004 sind (Beton-)Formsteine der eingangs genannten Art bekannt, bei denen nach der Steinverlegung die Abstandsnoppen auf Stoß zusammenliegen und somit zwischen den Seitenflächen der Formsteine Fugen entstehen, deren Breite der doppelten Dicke der Abstandsnoppen entsprechen. Diese Fugen sind zur Ableitung des Oberflächenwassers vorgesehen. Derartige Fugen können aber auch für Rasenbewuchs genutzt werden. Wenn jedoch eine höhere Verkehrsbelastung gegeben ist, so wird ein derartiges Pflaster instabil.

Es sind weiterhin (Beton-)Formsteine bekannt, bei denen die Abstandsnoppen so angeordnet sind, daß schmalere Fugen entstehen, die nach dem Verlegen mit Filterkies ausgefüllt werden und zur Wasserversickerung dienen. Da die Pflasterfugen hier nicht so breit sind wie die Rasenfugen, ist ein derartiges Pflaster einer höheren Verkehrsbelastung aussetzbar.

Es ist nun ungünstig, wenn je nach Art des zu erstellenden Pflasters verschiedenartige Formsteine hergestellt, gelagert und transportiert werden müssen, da dieses die Kosten wesentlich erhöht. Weiterhin ist es oft wünschenswert, ein im wesentlichen optisch einheitliches Pflaster zu erstellen, das der unterschiedlichen Verkehrsbelastung entsprechend ausgebildet ist.

Es ist Aufgabe der Erfindung, einen Bausatz aus (Beton-)Formsteinen der eingangs genannten Art dahingehend weiterzubilden, daß die Formsteine mit verschiedenen Fugenbreiten verlegbar sind und dabei gleichzeitig der Vorgang des Verlegens selbst vereinfacht wird.

Diese Aufgabe wird gelöst durch einen Bausatz, der die Merkmale des Anspruchs 1 aufweist. Durch diesen Bausatz aus (Beton-)Formsteinen ist es möglich, durch eine gezielte Relativanordnung der Formsteine zueinander verschiedenartige Erdreichabdeckungen (Pflasterungen) herzustellen, die je nach Verkehrsbelastung unterschiedlich breite Fugen aufweisen.

Bei einer Verlegung, bei der die Abstandsnoppen aller Formsteine zueinander auf Lücke liegen, bildet sich eine etwa durch eine (einzige) Dicke der Abstandsnoppen in ihrer Breite definierte Fuge, die als Rieselfuge oder eine einen schmalen Rasenbewuchs oder dergleichen ermöglichende Bewuchsfuge dient. Wenn jedoch die Formsteine mit "gleichartigen" Seitenflächen aufeinander verlegt werden, somit also die Abstandsnoppen auf Stoß liegen, bilden sich zwischen den Formsteinseitenflächen breitere Fugen, deren Breite durch die doppelte Dicke der Abstandsnoppen definiert ist. Diese Fugen können für Rasenbewuchs genutzt werden.

Die Anzahl und Anordnung der Abstandsnoppen an den Seitenflächen der Formsteine kann in vielfältiger Weise erfolgen, wobei der Grundsatz berücksichtigt werden muß, daß durch Verdrehen der einzelnen Formsteine um 90° oder auf 180° zueinander eine fortlaufende Pflasterung mit sowohl auf Stoß oder auch auf Lücke liegenden Abstandsnoppen sich bilden läßt. Am einfachsten läßt sich dies erreichen, indem je zwei "übereck" aneinandergrenzende Seitenflächen hinsichtlich Anzahl und Relativstellung der Abstandsnoppen übereinstimmend ausgebildet sind. So können zum Beispiel die beiden "übereck" aneinandergrenzenden Seitenflächen je zwei im Abstand voneinander angeordnete Abstandsnoppen aufweisen, während die beiden anderen aneinandergrenzenden Seitenflächen jeweils eine Abstandsnoppe aufweisen. In diesem Fall ist es am günstigsten, wenn die Abstandsnoppen der Seitenflächen mit nur einer Abstandsnoppe jeweils in der Mitte der Seitenfläche angeordnet sind.

Schließlich ist es möglich, jeder Seitenfläche zwei Abstandsnoppen oder nur einen einzigen Abstandsnoppen zuzuordnen, so daß ein solcher Formstein entweder insgesamt acht oder insgesamt vier Abstandsnoppen aufweist. Im erstgenannten Falle würde die größere Anzahl von Abstandsnoppen eine größere Stabilität der Pflasterung in bezug auf die Aufnahme von Verkehrslasten aufweisen, aber geringere "Lücken" für einen eventuellen Pflanzenbewuchs lassen. Im anderen Falle, also bei nur vier Abstandsnoppen, würde die Pflasterung über relativ große in Längsrichtung der Fugen verlaufende Lücken verfügen zur Bildung eines relativ ausgiebigen, nahezu ununterbrochenen Bewuchses.

Abstandsnoppen verfügen zweckmäßigerweise über gleiche Abmessungen. Doch können die einzelnen Abstandsnoppen mit einer größeren Breite als die doppelten Abstandsnoppen pro Seitenfläche versehen sein.

Weitere vorteilhafte Ausführungsformen der Erfindung ergeben sich aus den Unteransprüchen und der nachfolgenden Beschreibung bevorzugter Ausführungsbeispiele der Erfindung, die anhand der Zeichnung näher erläutert werden. In der Zeichnung zeigen:
- Fig. 1: einen Formstein (erstes Ausführungsbeispiel) in Draufsicht,
- Fig. 2: einen Formstein nach Fig. 1 in einer Seitenansicht,
- Fig. 3: eine schematisierte Darstellung einer Steinverlegung zur Bildung von breiten (Rasen-)Fugen,
- Fig. 4: die Anordnung nach Fig. 3 in Seitenansicht,
- Fig. 5 und 6: die Anordnung nach den Fig. 3 und 4, wobei die Fugen mit Rasenbewuchs ausgefüllt sind,
- Fig. 7: die Draufsicht auf eine Steinverlegung zur Bildung von schmalen (Entwässerungs-)Fugen zwischen den Steinen,
- Fig. 8: eine Seitenansicht der Anordnung nach Fig. 7,
- Fig. 9 und 10: die Anordnungen nach den Fig. 7 und 8, wobei die Fugen mit Filterkies bzw. Split ausgefüllt sind.
- Fig. 11: einen Formstein (zweites Ausführungsbeispiel) in Draufsicht,
- Fig. 12: eine schematisierte Darstellung einer Steinverlegung zur Bildung breiter Fugen,
- Fig. 13: eine Steinverlegung zur Bildung von schmalen Fugen,
- Fig. 14: eine alternative Verlegeanordnung der Formsteine zur Darstellung in Fig. 12 mit breiten Fugen,
- Fig. 15: einen Formstein (drittes Ausführungsbeispiel) in Draufsicht,
- Fig. 16: eine schematisierte Darstellung einer Steinverlegung zur Bildung breiter Fugen,
- Fig. 17: eine Steinverlegung zur Bildung von schmalen Fugen,
- Fig. 18: eine Steinverlegung zur Bildung von teilweise schmalen Fugen und breiten Fugen,
- Fig. 19: einen Formstein (viertes Ausführungsbeispiel) in Draufsicht,
- Fig. 20: eine schematisierte Darstellung einer Steinverlegung zur Bildung breiter Fugen,
- Fig. 21: eine Steinverlegung zur Bildung von schmalen Fugen,
- Fig. 22: einen Formstein (fünftes Ausführungsbeispiel) in Draufsicht,
- Fig. 23: eine schematisierte Darstellung einer Steinverlegung zur Bildung von breiten Fugen,
- Fig. 24: eine Steinverlegung zur Bildung von schmalen Fugen,
- Fig. 25: einen Formstein mit rechteckigen Grundflächen (sechstes Ausführungsbeispiel) in Draufsicht,
- Fig. 26: eine schematisierte Darstellung einer Steinverlegung zur Bildung von breiten Fugen, und
- Fig. 27: eine Steinverlegung zur Bildung von schmalen Fugen.

Die aus Beton bestehenden Formsteine 10, 33, 37, 40, 45 nach den ersten fünf Ausführungsbeispielen weisen eine im wesentlichen quadratische Form auf, so daß die Seitenflächen 11 bis 14 der Formsteine 10, 33, 37, 40, 45 gleich lang und ihre Ecken 24, 26 voneinander gleich weit entfernt sind.

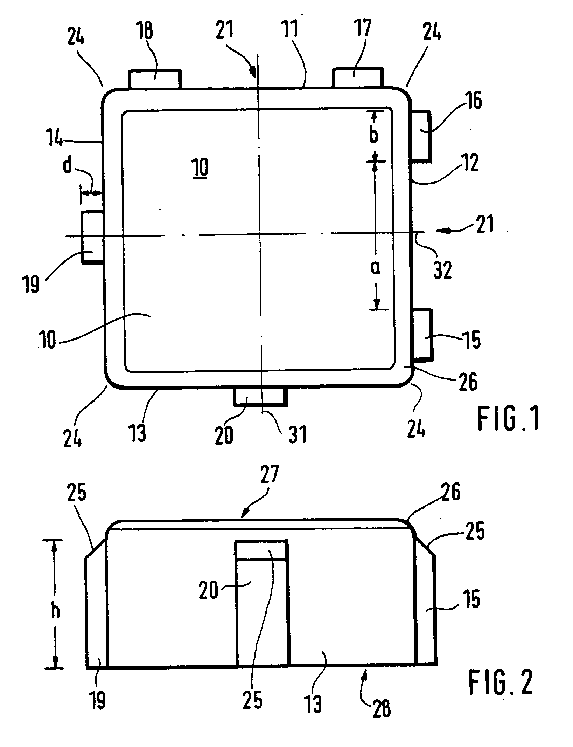

Zwei aneinandergrenzende Flächen 11 und 12 des Formsteins 10 nach dem ersten Ausführungsbeispiel (Fig. 1 bis 10) weisen jeweils zwei Abstandsnoppen 15 und 16 bzw. 17 und 18 auf, während die daran angrenzenden Seitenflächen 13 und 14 über jeweils nur eine Abstandsnoppe 19 bzw. 20 verfügen.

An den Seitenflächen 13 und 14 sind die jeweils einzigen Abstandsnoppen 19 und 20 mittig angebracht, liegen also genau (symmetrisch) auf durch die Mitten der Seitenflächen 13, 14 verlaufende Mittellinien 31, 32 des Formsteins 10.

Die auf den jeweils gegenüberliegenden Seitenflächen 11 und 12 des Formsteins 10 angebrachten Paare von Abstandsnoppen 15, 16 bzw. 17, 18 sind jeweils nahe der Ecken 24 des Formsteins 10 angebracht und liegen somit auch symmetrisch auf beiden Seiten der Mittellinien 31, 32. Die lichten Abstände a zwischen den Paaren von Abstandsnoppen 15, 16 bzw. 17, 18 sind hierbei größer als die Breite b der Abstandsnoppen 15 bis 20. Die Dicke d, also das Maß, das die Abstandsnoppen 15 bis 20 gegenüber den Seitenflächen 11 bis 14 vorstehen, ist bei allen Abstandsnoppen 15 bis 20 gleich gewählt.

An ihren, der Unterseite 28 des Formsteins 10 zugewandten Endflächen schließen die Abstandsnoppen 15 bis 20 bündig mit der Unterseite 28 ab. Die Höhe h der Abstandsnoppen ist geringer als die der Formsteine 10. An ihren oberen Enden weisen die Abstandsnoppen 15 bis 20 Abschrägungen 25 auf, über welche sie in Richtung auf die jeweilige Seitenfläche 11 bis 14 des Formsteins zulaufen und in diese übergehen.

Die Oberseite 27 der Formsteine 10 geht zu den Seitenflächen 11 bis 14 über durch eine ringsherum laufende Rundung 26, bei der es sich alternativ auch um eine Abschrägung handeln kann. Die Abschrägungen 25 der Abstandsnoppen 15 bis 20 enden jeweils ein gewisses Stück unter den Rundungen 26, so daß nach dem Ausfugen die Abschrägungen 25 und damit die gesamten Abstandsnoppen 15 bis 20 nicht mehr sichtbar sind.

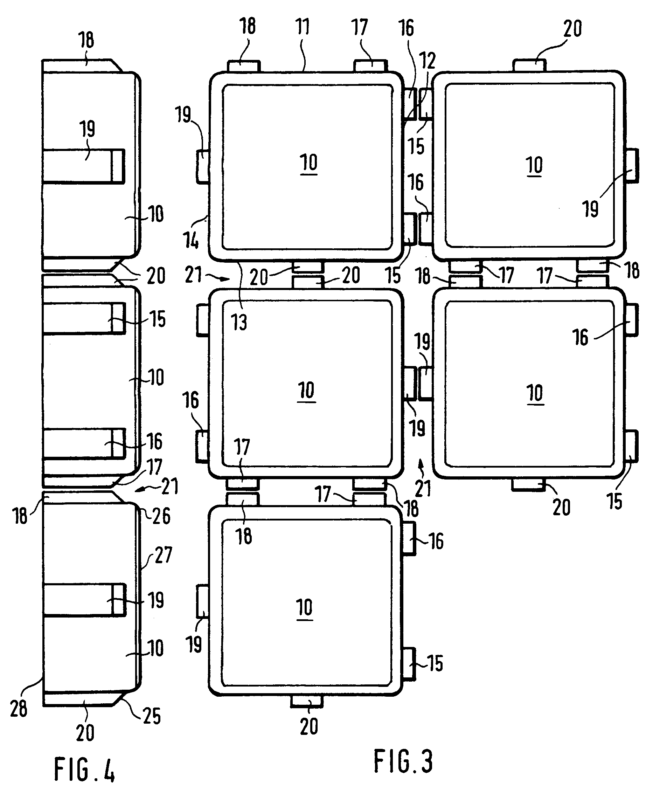

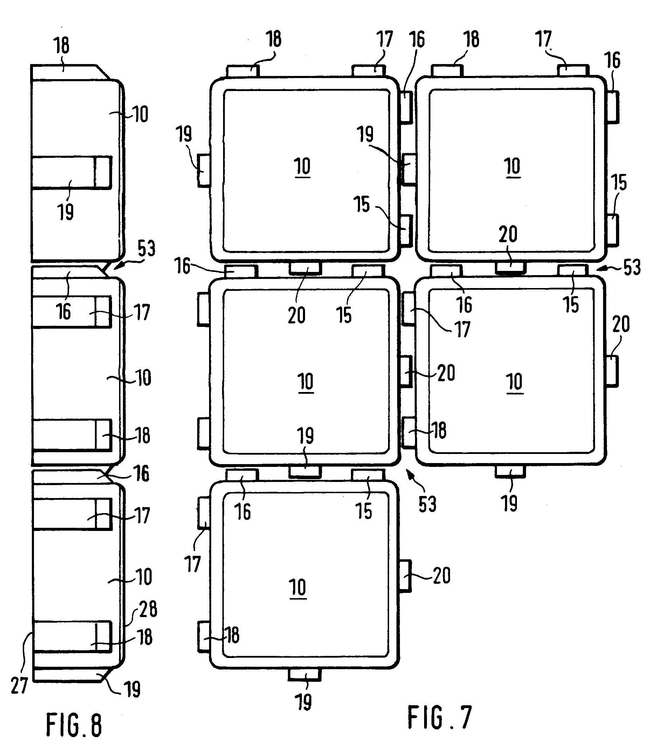

Je nachdem, wie man nun die Formsteine 10 zueinander ausgerichtet aneinanderlegt, liegen nun entweder die Formsteine 10 Abstandsnoppe an Abstandsnoppe, so daß die Fugen 21 zwischen den Paaren von Abstandsnoppen 15, 16 / 17, 18 oder 19, 20, also die Abstände zwischen zueinander gerichteten Seitenwänden 11, 12 bzw. 13, 14, etwa der Dicke d zweier Abstandsnoppen 15 bis 20 entsprechen. Diese Verlegeart ist in den Fig. 3, 4 bzw. 5, 6 gezeigt. Bei einer alternativen Verlegeart liegen die Abstandsnoppen 15 bis 20 der Formsteine 10 auf Lücke zueinander. Beim gezeigten Ausführungsbeispiel liegt dadurch stets eine Abstandsnoppe 19 bzw. 20 mittig zwischen zwei außen an einer jeweiligen Seitenfläche 11 bzw. 12 angeordneten Abstandsnoppen 15, 16 bzw. 17, 18. Die Fugen 53 zwischen den Seitenflächen 11 bis 14 benachbarter Formsteine 10 und der Ecken 24 entsprechen dadurch etwa der Dicke d einer Abstandsnoppe 15 bis 20, wobei üblicherweise die Fugen 53 etwas größer als die Dicke d sein werden, wenn die Abstandsnoppen 15 bis 20 nicht unmittelbar an die ihren jeweiligen Vorderseiten zugerichteten Seitenflächen 11 bis 14 des benachbarten Formsteins 10 anliegen. Diese Verlegeart ist dargestellt in den Fig. 7 bis 10.

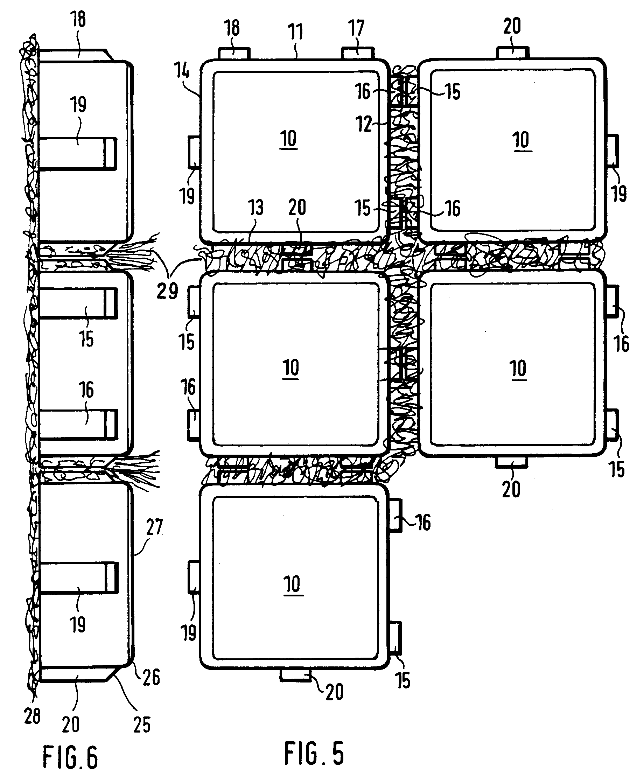

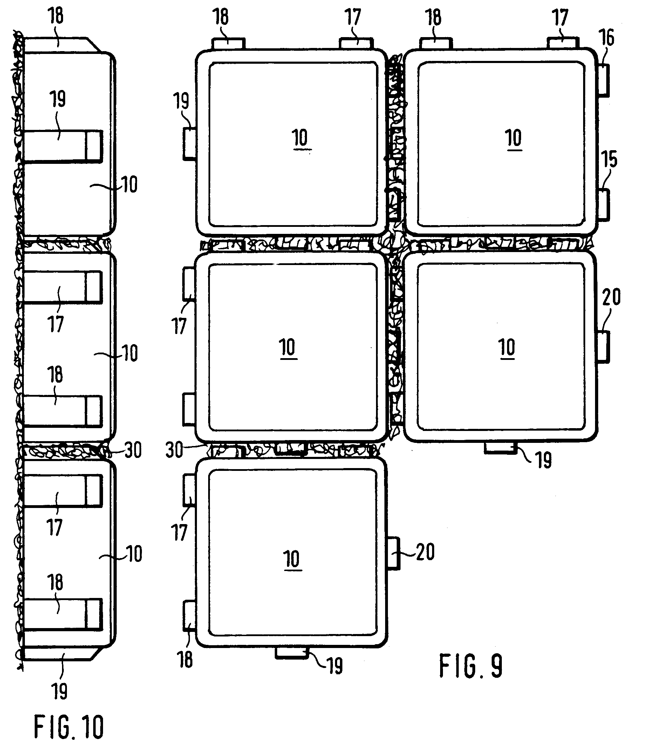

Wenn nach dem Verlegen der Formsteine 10 zu einer Pflasterung zwischen den insbesondere die doppelte Dicke 2d der Abstandsnoppen 15 bis 20 aufweisenden Fugen 21 der Formsteine mit Humus oder dergleichen befüllt und mit Gras bewachsen sind, wie es die Fig. 5 und 6 zeigen, oder die schmaleren Fugen 53 gemäß den Fig. 9 und 10 lediglich mit Sand 30 gefüllt sind, bildet sich eine optisch einheitliche Pflasterfläche, bei der die Abstandsnoppen 15 bis 20 aufgrund ihrer geringeren Höhe im Vergleich zum Grundkörper des Formsteins 10 nicht mehr in Erscheinung treten, nämlich entweder vom Sand 30 oder vom Gras 29 bzw. Humus oder dergleichen überdeckt sind.

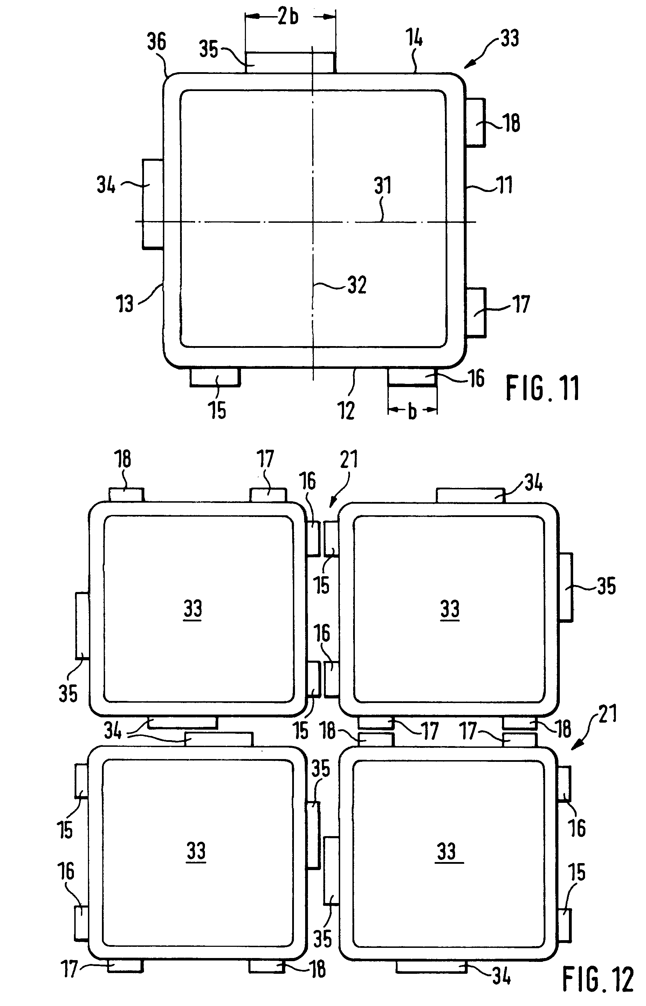

Die Fig. 11 bis 13 betreffen ein alternatives Ausführungsbeispiel eines Formsteins 33, der vom vorstehend beschriebenen Formstein 10 durch eine andere Ausbildung und Anordnung einzelner Abstandsnoppen 34 an den Seitenflächen 13 und 14 sich unterscheidet. Im übrigen gleicht der Formstein 33 dem Formstein 10. Dieses trifft auch für die weiter unten beschriebenen weiteren Ausführungsbeispiele der Erfindung, nämlich die Formsteine 37, 40 und 45, zu.

Die einzeln den Seitenflächen 13, 14 des Formsteins 33 zugeordneten Abstandsnoppen 34, 35 sind asymmetrisch zu den Mittellinien 31, 32 angeordnet und zwar derart, daß diese zwar noch durch die Abstandsnoppen 34, 35 verlaufen, aber in einem seitlichen Bereich. Im gezeigten Ausführungsbeispiel verlaufen die Mittellinien 31, 32 auf einem Viertel der Breite 2b durch die Abstandsnoppen 34, 35, sind also um ein Viertel aus ihrer Mitte versetzt (vgl. Fig. 11). Der Versatz der Abstandsnoppen 34, 35 relativ zueinander ist so erfolgt, daß der größere Teil der Breite 2b der Abstandsnoppen 34, 35, nämlich zwei Drittel derselben, zu einer zwischen den beiden rechtwinklig zueinander verlaufend angrenzenden Seitenwänden 13, 14 eingeschlossenen Ecke 36 weisen.

Die Abstandsnoppen 34, 35 weisen beim Formstein 33 eine größere Breite als die übrigen paarweise zueinander an zwei Seitenflächen 11, 12 angeordnete Abstandsnoppen 15 bis 18 auf, verfügen nämlich im gezeigten Ausführungsbeispiel über die doppelte Breite 2b derselben. Alternativ kommen auch andere Breitenverhältnisse zwischen den Abstandsnoppen 34, 35 einerseits und den Abstandsnoppen 15 bis 18 andererseits in Betracht.

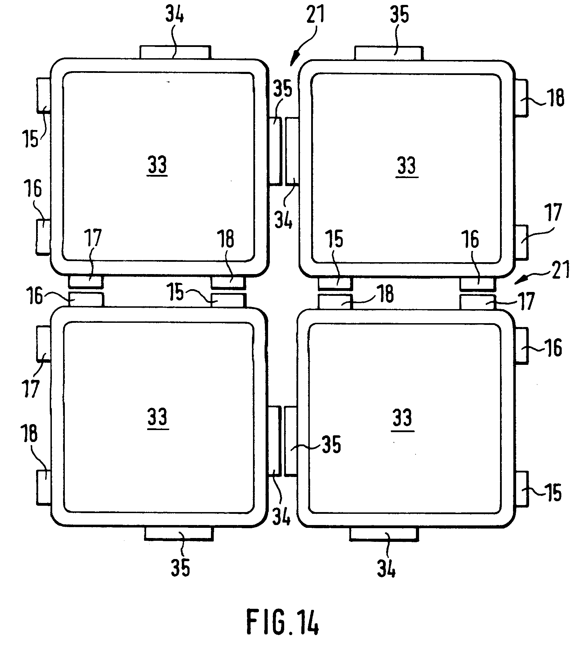

Bei Verlegung der Formsteine 33 mit auf Stoß befindlichen Abstandsnoppen 15 bis 18 und 34, 35, also mit (doppelt) breiten Fugen 21, liegen aufgrund ihrer asymmetrischen Anordnung die Abstandsnoppen 34, 35 nur teilweise auf Stoß, indem sich von jeder der aneinanderliegenden Abstandsnoppen 34, 35 nur eine Hälfte ihrer Breite 2b überlappt. Dieses zeigt deutlich die Fig. 12. Die übrigen (einfach breiten) Abstandsnoppen 15 bis 18 liegen wiederum sich mit nahezu vollständiger Breite b gegenüber. Alternativ ist es denkbar, die Formsteine 33 mit einer anders als in der Fig. 12 gezeigten Relativlage zueinander mit auf Stoß voreinander liegenden Abstandsnoppen 15 bis 18 anzuordnen, wobei dann die doppelt breiten einzelnen Abstandsnoppen 34, 35 vollflächig auf Stoß liegen, also über ihre gesamte (doppelte) Breite 2b aneinanderliegen. Die Anlagefläche der doppelt breiten Abstandsnoppen 34, 35 entspricht dann der der paarweise zueinander angeordneten normal breiten Abstandsnoppen 15 bis 18. Dadurch sind trotz der unterschiedlichen Anzahl von Abstandsnoppen 15 bis 18 bzw. 35 und 36 an den einzelnen Seitenflächen 11 bis 14 der Formsteine 33 gleich große Stoßflächen vorhanden zur gleichmäßigen Verteilung der Verkehrslasten in Längs- und Querrichtung der Pflasterung (Fig. 14).

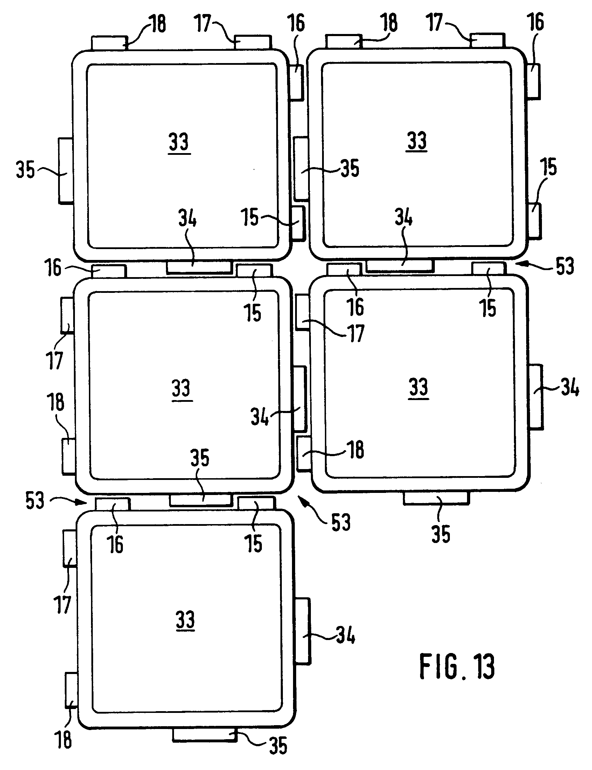

Bei Verlegung der Formsteine 33 mit auf Lücke befindlichen Abstandsnoppen 15 bis 18 bzw. 34, 35 gemäß der Fig. 13 treten die einzelnen Abstandsnoppen 34 bzw. 35 zwischen jeweils ein Paar von Abstandsnoppen 15, 16 bzw. 17, 18. Dadurch sind relativ große Anlageflächen zwischen den schmalen Fugen 53 der Formsteine 33 geschaffen zur Übertragung besonders großer Verkehrslasten.

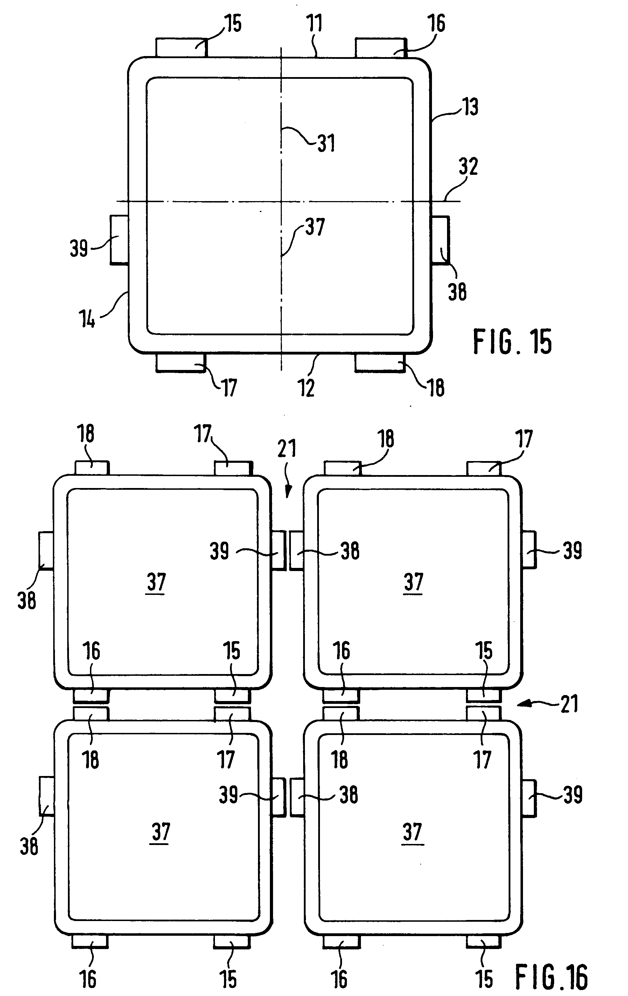

Die Fig. 15 bis 18 zeigen einen Formstein 37, der wiederum über sechs gleich breite Abstandsnoppen 15 bis 18 und 38, 39 verfügt. Hier sind gegenüberliegenden Seitenflächen 11 und 12 jeweils zwei Abstandsnoppen 15, 16 bzw. 17, 18 zugeordnet und zwar in einer randseitigen, symmetrischen Anordnung gemäß den beiden vorstehend beschriebenen Ausführungsbeispielen. Die beiden übrigen gegenüberliegenden Seitenflächen 13 und 14 des Formsteins 37 verfügen über jeweils eine einzige Abstandsnoppe 38, 39, die asymmetrisch zur die Seitenflächen 12 und 14 halbierenden Mittellinie 32 angeordnet sind, und zwar mit geringem Abstand neben der Mittellinie 32 liegend. Alternativ können die Abstandsnoppen 38, 39 auch mit einem seitlichen Rand auf der Mittellinie 32 liegen. Versetzt sind die Abstandsnoppen 38 und 39 zur gleichen Seite der Mittellinie 32 hin, liegen also beide dichter an der die Seitenflächen 13 und 14 verbindenden quergerichteten Seitenfläche 12. Dieses geht deutlich aus der Fig. 15 hervor.

In der Fig. 16 ist die Verlegung der Formsteine 37 mit auf Stoß liegenden Abstandsnoppen 15 bis 18 bzw. 38, 39 dargestellt, so daß die Fuge 21 zwischen benachbarten Formsteinen 37 der doppelten Dicke der Abstandsnoppen 15 bis 18 bzw. 38, 39 entspricht. Sämtliche Abstandsnoppen 15 bis 18 bzw. 38, 39 liegen hier vollflächig auf Stoß.

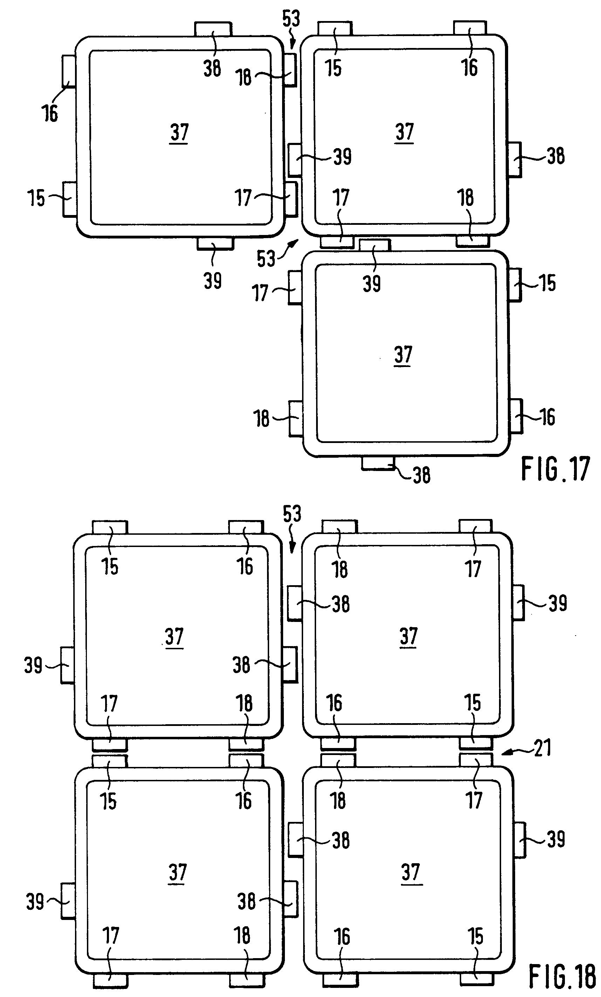

In der Fig. 17 ist eine Verlegung der Formsteine 37 mit vollständig auf Lücke sich befindenden Abstandsnoppen 15 bis 18 und 38, 39 gezeigt, so daß hier die Fugen 53 sowohl in Längs- als auch Querrichtung der Pflasterung gleich breit sind, nämlich nur etwa der Dicke d einer jeweiligen Abstandsnoppe 15 bis 18 bzw. 38, 39 entsprechen.

Schließlich zeigt die Fig. 18 eine alternative Verlegemöglichkeit, bei der nur die einzelnen Abstandsnoppen 38, 39 auf Lücke liegen, also eine schmale Fuge 53 mit nur einer Dicke d der Abstandsnoppen 38, 39 bilden, demgegenüber die paarweise einer jeweiligen Seitenfläche 11 bzw. 12 zugeordneten Abstandsnoppen 15 bis 18 voll überlappend auf Stoß liegen zur Bildung einer breiten Fuge 21 mit etwa der doppelten Dicke 2d der Abstandsnoppen 15 bis 18. Auf diese Weise stützen sich sowohl in Längs- als auch in Querrichtung der in der gezeigten Weise aus mehreren Formsteinen 37 gebildeten Pflasterung einerseits zwei Abstandsnoppen 15 bis 18 aneinander ab, während andererseits die einzelnen Abstandsnoppen 38, 39 an entsprechenden Seitenflächen 13 oder 14 benachbarter Formsteine 37 anliegen. Dadurch können sowohl in Längs- als auch Querrichtung der Pflasterung etwa gleich große Verkehrslasten übertragen werden. Außerdem kann eine unterschiedlich intensive Bepflanzung der Fugen 21, 53 erfolgen oder in einer Richtung nur Rasen 29 vorhanden sein, während in der anderen Richtung nur unbepflanzter Sand 30 zwischen den Fugen 53 vorhanden ist. Auf diese Weise lassen sich besonders interessante optische Effekte bilden.

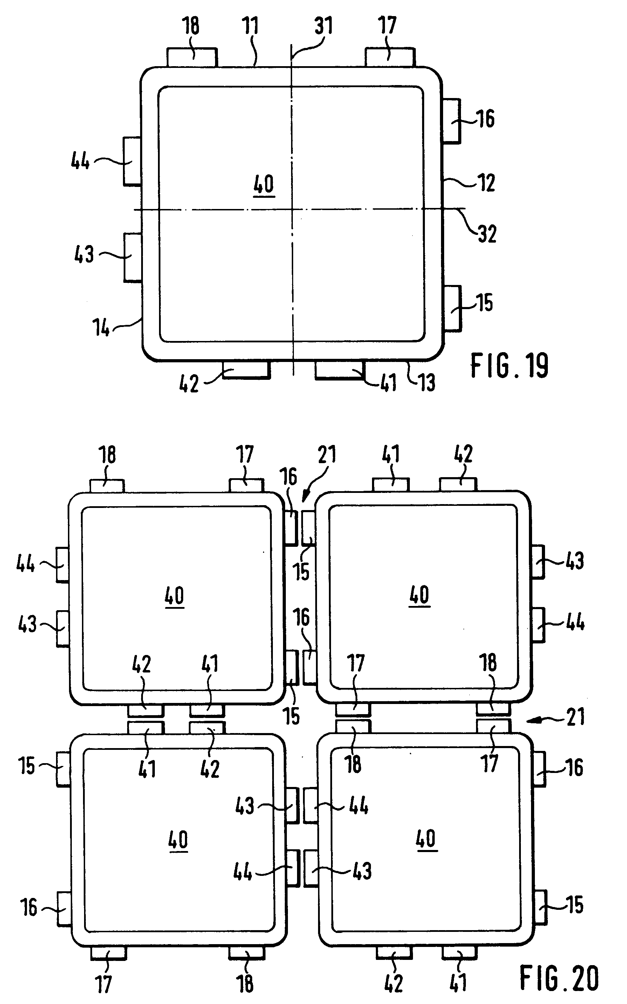

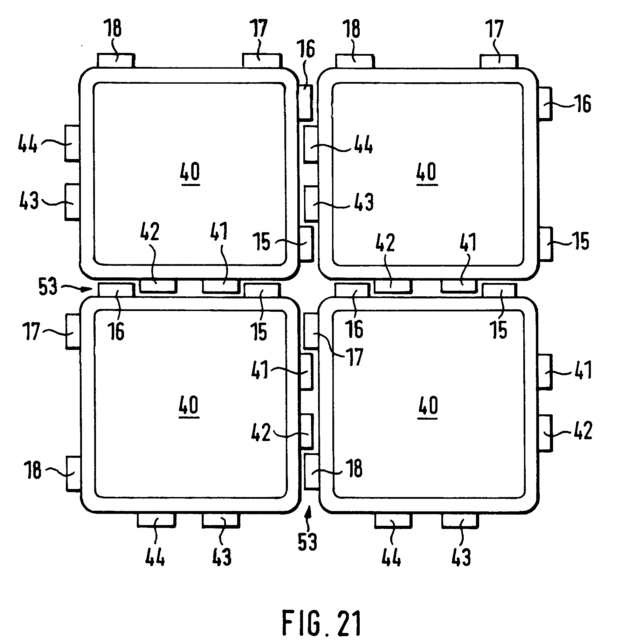

Die Fig. 19 bis 21 zeigen einen Formstein 40, der an aneinander angrenzenden, rechtwinklig zueinander verlaufenden Seitenflächen 11 und 12 jeweils zwei außenliegende Abstandsnoppen 15, 16 bzw. 17, 18 aufweist, die ähnlich zum Formstein 10 gemäß der Fig. 1 ausgebildet und positioniert sind. Die beiden übrigen Seitenflächen 13 und 14 des Formsteins 40 verfügen auch über zwei symmetrisch zu den Mittellinien 31, 32 angeordnete Abstandsnoppen 41 bis 44, die in ihren Abmessungen wie die anderen Abstandsnoppen 15 bis 18 ausgebildet sind. Wie die Fig. 19 erkennen läßt, ist der Abstand der paarweise der jeweiligen Seitenfläche 13 bzw. 14 zugeordneten Abstandsnoppen 41 bis 44 geringer als der der Abstandsnoppen 15 bis 18 an den Seitenflächen 11, 12, nämlich derart gewählt, daß der Abstand zwischen zwei Außenflächen der Abstandsnoppen 41, 42 bzw. 43, 44 etwas geringer ist als der lichte Abstand a zwischen zueinander gerichteten Seitenflächen der Abstandsnoppen 15, 16 bzw. 17, 18. Auf diese Weise ist sichergestellt, daß bei entsprechender Relativanordnung der Formsteine 40 zueinander die enger zusammenliegenden Abstandsnoppen 41 bis 44 zwischen die beiden äußeren Abstandsnoppen 15 bis 18 treten können, also auf Lücke zu diesen verlegbar sind zur Bildung schmaler Zwischenräume bzw. Fugen 53 gemäß der Fig. 21.

Zur Bildung doppelt breiter Fugen 21 sind die Formsteine 40 mit einer derartigen Relativlage zueinander verlegbar, daß sämtliche Abstandsnoppen 15 bis 18 und 41 bis 44 auf Stoß liegen, und zwar jeweils bündig (Fig. 20).

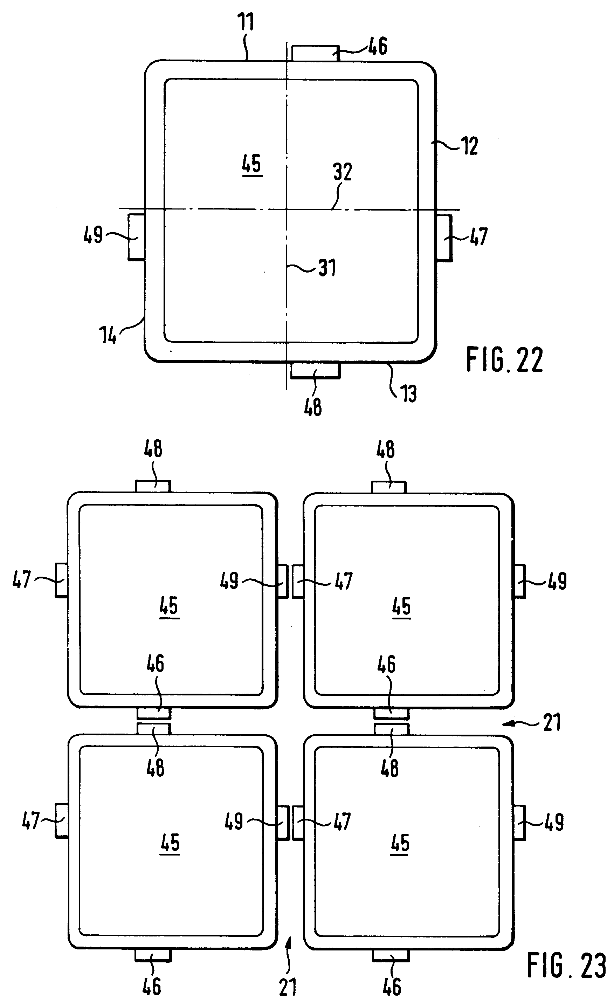

Die Fig. 22 bis 24 betreffen einen Formstein 45, der nur über vier Abstandsnoppen 46 bis 49 verfügt, wobei jeder Seitenfläche 11 bis 14 jeweils ein einzelner Abstandsnoppen 46, 47 oder 48, 49 zugeordnet ist. Wie die Fig. 22 zeigt, sind alle Abstandsnoppen 46 bis 49 asymmetrisch zu den Mittellinien 31, 32 angeordnet, liegen nämlich mit geringfügigem Abstand neben denselben. Dabei sind an gegenüberliegenden Seitenflächen 11, 13 bzw. 12, 14 liegende Abstandsnoppen 46, 48 bzw. 47, 49 zur gleichen Seite der entsprechenden Mittellinie 31, 32 versetzt. Damit liegen jeweils zwei Abstandsnoppen 46, 48 bzw. 47, 49 sich jeweils paarweise direkt gegenüber.

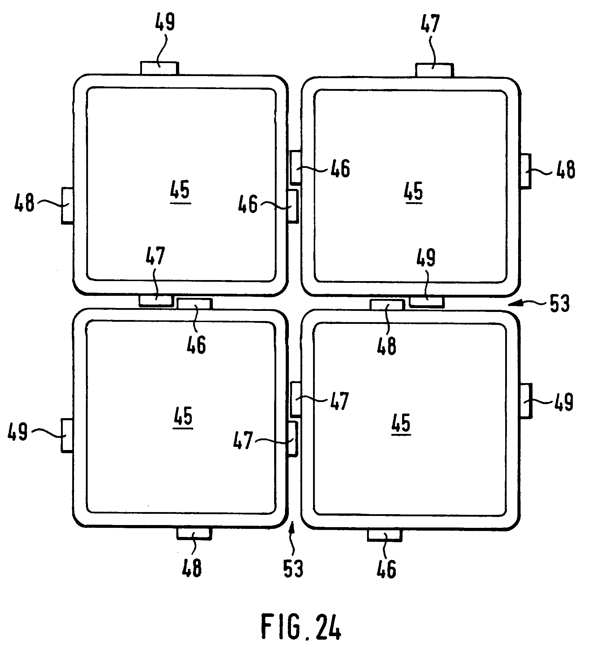

Durch entsprechende Relativanordnung der Formsteine 45 zueinander lassen sich diese mit doppelt breiten Fugen 21 verlegen, indem die Abstandsnoppen 46, 49 benachbarter Formsteine 45 vollflächig auf Stoß zueinander liegen (Fig. 23), aber auch zur Bildung schmaler Fugen 53 mit etwa der Dicke d einer Abstandsnoppe 46 bis 49 verlegt werden können, wobei dann die Abstandsnoppen 46 bis 49 auf Lücke liegen (Fig. 24). Eine aus den Formsteinen 45 gebildete Pflasterung hat gegenüber den Pflasterungen aus den Formsteinen 10, 33, 37 oder 40 den Vorteil, daß selbst bei Verlegung mit schmaleren Fugen 53 die Freiräume zwischen benachbarten Formsteinen 45 aufgrund der einzelnen Abstandsnoppen 46 bis 49 an den Seitenflächen 11 bis 14 relativ groß sind, so daß trotz schmaler Fugen noch ein nahezu durchgehender Bewuchs derselben möglich ist.

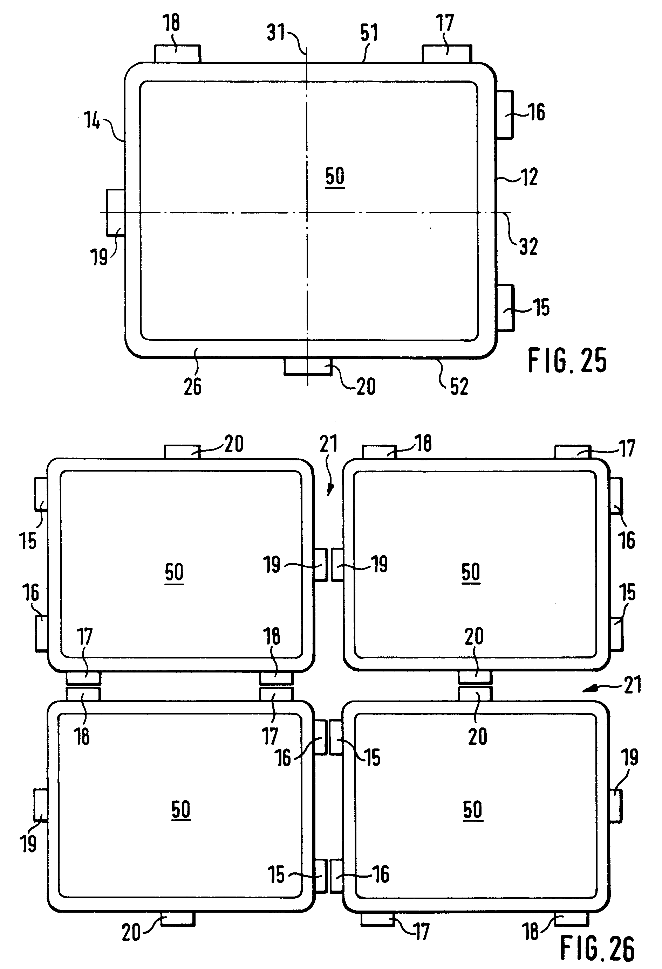

Schließlich geht aus den Fig. 25 bis 27 ein Formstein mit einer rechteckförmigen Grundfläche hervor. Dieser verfügt über zwei kurze Seitenflächen 12, 14 und zwei lange Seitenflächen 51, 52. Der Formstein 50 verfügt in Anlehnung an den Formstein 10 über sechs Abstandsnoppen 15 bis 20, die nach dem gleichen geometrischen Grundprinzip wie beim Formstein 10 auf die Seitenflächen 11, 13 bzw. 51, 52 verteilt sind, also symmetrisch in den Mittellinien 31, 32 angeordnet sind. Im übrigen entspricht der Formstein 50 in seiner Ausgestaltung dem Formstein 10 bzw. dem Formstein 33, 37, 40 und 45. Auch ist es denkbar, die Abstandsnoppen nach dem geometrischen Prinzip der Formsteine 33, 37, 40 und 45 beim Formstein 50 vorzusehen.

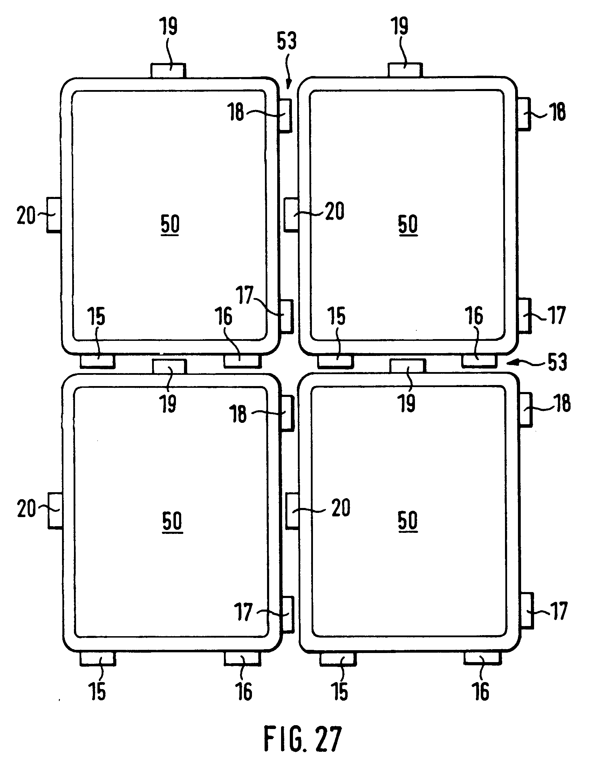

Mehrere Formsteine 50 lassen sich je nach ihrer Relativanordnung zueinander mit auf Stoß (Fig. 26) oder auf Lücke (Fig. 27) liegenden Abstandsnoppen 15 bis 20 verlegen, so daß wiederum Fugen 53 mit einer einfachen Dicke d oder Fugen 21 mit doppelter Dicke der Abstandsnoppen 15 bis 20 entstehen.

Abweichend zu den vorstehend geschilderten rechteckförmigen und quadratischen Grundflächen können in erfindungsgemäßer Weise auch Formsteine mit anderen mehreckigen, beispielsweise sechseckigen, Grundflächen und entsprechenden Abstandsnoppen gebildet sein.

## Patentansprüche

1. Bausatz aus blockförmigen Formsteinen (10) zum Erstellen einer Erdreichabdeckung, wobei die Formsteine (10) im Grundriß rechteckig oder quadratisch ausgebildet und durch vier senkrechte Seitenflächen (11, 12, 13, 14) begrenzt sind, an allen Seitenflächen (11, 12, 13, 14) rippenförmig ausgebildete, aufrechte Abstandsnoppen (15..20; 34, 35; 38, 39; 42..44; 46..49) angeordnet sind, die eine etwa gleiche Dicke (d) als Tiefe zu den Seitenflächen (11, 12..) aufweisen, so daß sämtliche Abstandsnoppen (15, 16..) gegenüber den Seitenflächen (11, 12..) im wesentlichen gleich weit vorstehen, und je zwei Seitenflächen (11, 12..) hinsichtlich Anzahl und Relativstellung der Abstandsnoppen (15, 16..), nämlich des Abstands derselben von einer gedachten, aufrechten Mittellinie der jeweiligen Seitenfläche (11, 12, 13, 14), übereinstimmend ausgebildet sind,
**dadurch gekennzeichnet,** daß
- die Höhe (h) der Abstandsnoppen (15, 16..) annähernd der Höhe des Formsteins (10) entspricht,
- zwei erste Seitenflächen (11, 12..) hinsichtlich Anzahl und/oder Relativstellung der Abstandsnoppen (15, 16..) abweichend von den anderen beiden Seitenflächen (11, 12..) ausgebildet sind,
- Relativstellung, Anzahl und Breite der Abstandsnoppen (15, 16..) der Seitenflächen (11, 12..) so gewählt sind, daß die Abstandsnoppen (15, 16..) zweier hinsichtlich Anzahl und Relativstellung der Abstandsnoppen (15, 16..) unterschiedlich ausgebildeter Seitenflächen (11, 12..) benachbarter Formsteine (10) einander nicht überlappen, wenn diese Seitenflächen (11, 12..) einander zugekehrt sind, so daß die Abstandsnoppen (15, 16..) unmittelbar an einer Seitenfläche (11, 12..) eines benachbarten Formsteins (10) anliegen,
- die Abstandsnoppen (15, 16..) weiterhin so bemessen und angeordnet sind, daß mindestens eine teilweise Überlappung der Abstandsnoppen (15, 16..) der Formsteine (10) gegeben ist, wenn hinsichtlich Anzahl und Relativstellung der Abstandsnoppen (15, 16..) übereinstimmend ausgebildete Seitenflächen (11, 12..) zweier benachbarter Formsteine (10) einander gegenüberliegen, so daß sich die Abstandsnoppen (15, 16..) der benachbarten Formsteine (10) aufeinander abstützen,
- weiterhin die Abstandsnoppen (15, 16..) so angeordnet sind, daß innerhalb einer Erdreichabdeckung entweder nur übereinstimmend ausgebildete Seitenflächen (11, 12..) unter Bildung breiter Fugen (21) oder nur unterschiedlich ausgebildete Seitenflächen (11, 12..) unter Bildung schmaler Fugen (53) einander zugekehrt sind und
- die Breite (b) der Abstandsnoppen (15, 16..) einerseits und die lichten Abstände (a) zwischen zwei an derselben Seitenfläche (11, 12..) angeordneten Abstandsnoppen (15, 16..) andererseits so bemessen sind, daß bei verlegten Formsteinen (10) in den schmalen Fugen (53) freie Abschnitte zwischen innerhalb der Fuge (53) benachbarten Abstandsnoppen (15, 16..) entstehen, wenn hinsichtlich Anzahl und Relativstellung der Abstandsnoppen (15, 16..) unterschiedlich ausgebildete Seitenflächen (11, 12..) benachbarter Formsteine (10) einander zugekehrt sind.

2. Bausatz nach Anspruch 1, dadurch gekennzeichnet, daß zwei erste hinsichtlich Anzahl und Relativstellung der Abstandsnoppen (15, 16..) übereinstimmend ausgebildete Seitenflächen (11, 12..) je zwei im Abstand voneinander angeordnete Abstandsnoppen (15, 16..) aufweisen.

3. Bausatz nach Anspruch 1 oder 2, dadurch gekennzeichnet, daß je zwei "über Eck" aneinandergrenzende Seitenflächen (11, 12 einerseits; 13, 14 andererseits) hinsichtlich Anzahl und Relativstellung der Abstandsnoppen (15, 16..) übereinstimmend ausgebildet sind und zwei erste "über Eck" aneinandergrenzende Seitenflächen (11, 12) je zwei im Abstand voneinander angeordnete Abstandsnoppen (15, 16..) aufweisen.

4. Bausatz nach Anspruch 3, dadurch gekennzeichnet, daß die beiden anderen aneinandergrenzenden Seitenflächen (13, 14) jeweils eine Abstandsnoppe (19, 20; 34, 35) aufweisen.

5. Bausatz nach einem oder mehreren der Ansprüche 1 bis 4, dadurch gekennzeichnet, daß die beiden anderen aneinandergrenzenden Seitenflächen (13, 14) jeweils einen in der Mitte der Seitenfläche (13, 14) angeordneten Abstandsnoppen (19, 20) aufweisen.

6. Bausatz nach einem oder mehreren der Ansprüche 1 bis 3, dadurch gekennzeichnet, daß alle Seitenflächen (11, 12..) die gleiche Anzahl Abstandsnoppen (15, 16..) aufweisen.

7. Bausatz nach einem oder mehreren der Ansprüche 1 bis 4, dadurch gekennzeichnet, daß einzelne Abstandsnoppen (34, 35; 38, 39; 46..49) asymmetrisch zu den Mittellinien (31, 32) der Seitenflächen (11, 12..) angeordnet sind.

8. Bausatz nach Anspruch 7, dadurch gekennzeichnet, daß die einzelnen Abstandsnoppen (38, 39; 46..49) seitlich versetzt neben den Mittellinien (31, 32) der entsprechenden Seitenfläche (11, 12..) angeordnet sind.

9. Bausatz nach Anspruch 7 oder 8, dadurch gekennzeichnet, daß bei an gegenüberliegenden Seitenflächen (11, 12..) einzeln asymmetrisch zu den Mittellinien (31, 32) angeordneten Abstandsnoppen (38, 39; 46..49) diese auf der gleichen Seite derjenigen Mittellinie (31, 32) liegen, zu der sie außermittig versetzt angeordnet sind.

10. Bausatz nach einem oder mehreren der Ansprüche 1 bis 5, dadurch gekennzeichnet, daß jeweils einer Seitenfläche (11, 12..) zugeordnete Paare von Abstandsnoppen (15, 16..) nahe (im Abstand von) den jeweiligen Ecken (24) angeordnet sind.

11. Bausatz nach Anspruch 10, dadurch gekennzeichnet, daß je zwei Abstandsnoppen (15, 16..) einer Seitenfläche (11, 12..) symmetrisch zu deren Mittellinie (31, 32) angeordnet sind.

12. Bausatz nach einem oder mehreren der Ansprüche 1 bis 11, dadurch gekennzeichnet, daß alle Abstandsnoppen (15, 16..) die gleichen Abmessungen aufweisen.

13. Bausatz nach Anspruch 7, dadurch gekennzeichnet, daß die einzelnen Abstandsnoppen (34, 35) außermittig auf den Mittellinien (31, 32) der jeweiligen Seitenfläche (13, 14) liegen, insbesondere mit einem Mittenversatz von weniger als der halben Breite der jeweiligen Abstandsnoppen (34, 35).

14. Bausatz nach Anspruch 13, dadurch gekennzeichnet, daß die Breite der einzelnen Abstandsnoppen (34, 35) größer als die Breite (b) der übrigen an den anderen Seitenflächen (11, 12) angeordneten Abstandsnoppen (15, 16..) ist, vorzugsweise doppelt so breit (2b).

## Claims

1. Set of structural elements comprising purpose-made blocks (10) for producing an earth-covering means, the purpose-made blocks (10) being designed to be rectangular or square in outline and being delimited by four perpendicular side surfaces (11, 12, 13, 14), there being arranged, on all side surfaces (11, 12, 13, 14), rib-type, upright spacer protrusions (15..20; 34, 35; 38, 39; 42..44; 46..49) which have an approximately identical thickness (d), as depth with respect to the side surfaces (11, 12, etc.), with the result that all spacer protrusions (15, 16, etc.) project from the side surfaces (11, 12, etc.) by essentially the same distance, and in each case two side surfaces (11, 12, etc.) being designed in a corresponding manner in terms of number and relative position of the spacer protrusions (15, 16, etc.), that is to say the spacing of the same from an imaginary, upright centre line of the respective side surface (11, 12, 13, 14), characterized in that
- the height (h) of the spacer protrusions (15, 16, etc.) corresponds approximately to the height of the purpose-made block (10),
- two first side surfaces (11, 12, etc.) are designed such that they differ from the other two side surfaces (11, 12, etc.) in terms of number and/or relative position of the spacer protrusions (15, 16, etc.),
- relative position, number and width of the spacer protrusions (15, 16, etc.) of the side surfaces (11, 12, etc.) are selected such that the spacer protrusions (15, 16, etc.) of two side surfaces (11, 12, etc.), which are designed differently in terms of number and relative position of the spacer protrusions (15, 16, etc.) and belong to neighbouring purpose-made blocks (10), do not overlap one another if said side surfaces (11, 12, etc.) are directed towards one another, with the result that the spacer protrusions (15, 16, etc.) rest directly on one side surface (11, 12, etc.) of a neighbouring purpose-made block (10),
- the spacer protrusions (15, 16, etc.) are, further, dimensioned and arranged such that at least a partial overlapping of the spacer protrusions (15, 16, etc.) of the purpose-made blocks (10) is obtained if side surfaces (11, 12, etc.), which are designed in a corresponding manner in terms of number and relative position of the spacer protrusions (15, 16, etc.) and belong to two neighbouring purpose-made blocks (10), lie opposite one another, with the result that the spacer protrusions (15, 16, etc.) of the neighbouring purpose-made blocks (10) are supported one upon the other,
- furthermore, the spacer protrusions (15, 16, etc.) are arranged such that, within an earth-covering means, either only side surfaces (11, 12, etc.) which are designed in a corresponding manner are directed towards one another to form wide joints (21) or only side surfaces (11, 12, etc.) which are designed differently are directed towards one another to form narrow joints (53), and
- on the one hand, the width (b) of the spacer protrusions (15, 16, etc.) and, on the other hand, the clearances (a) between two spacer protrusions (15, 16, etc.) arranged on the same side surface (11, 12, etc.) are dimensioned such that in the narrow joints (53), when the purpose-made blocks (10) are laid, free portions result between neighbouring spacer protrusions (15, 16, etc.) within the joint (53) if side surfaces (11, 12, etc.), which are designed differently in terms of number and relative position of the spacer protrusions (15, 16, etc.) and belong to neighbouring purpose-made blocks (10), are directed towards one another.

2. Set of structural elements according to Claim 1, characterized in that two first side surfaces (11, 12, etc.), which are designed in a corresponding manner in terms of number and relative position of the spacer protrusions (15, 16, etc.), have in each case two spaced-apart spacer protrusions (15, 16, etc.).

3. Set of structural elements according to Claim 1 or 2, characterized in that in each case two side surfaces (11, 12, on the one hand; 13, 14, on the other hand) which border one another "at a corner" are designed in a corresponding manner in terms of number and relative position of the spacer protrusions (15, 16, etc.) and two first side surfaces (11, 12) which border one another "at a corner" have in each case two spaced-apart spacer protrusions (15, 16, etc.).

4. Set of structural elements according to Claim 3, characterized in that the two other side surfaces (13, 14) which border one another have in each case one spacer protrusion (19, 20; 34, 35).

5. Set of structural elements according to one or more of Claims 1 to 4, characterized in that the two other side surfaces (13, 14) which border one another have in each case one spacer protrusion (19, 20) which is arranged in the centre of the side surface (13, 14).

6. Set of structural elements according to one or more of Claims 1 to 3, characterized in that all the side surfaces (11, 12, etc.) have the same number of spacer protrusions (15, 16, etc.).

7. Set of structural elements according to one or more of Claims 1 to 4, characterized in that individual spacer protrusions (34, 35; 38, 39; 46..49) are arranged in an asymmetrical manner with respect to the centre lines (31, 32) of the side surfaces (11, 12, etc.).

8. Set of structural elements according to Claim 7, characterized in that the individual spacer protrusions (38, 39; 46..49) are arranged such that they are laterally offset next to the centre lines (31, 32) of the corresponding side surface (11, 12, etc.).

9. Set of structural elements according to Claim 7 or 8, characterized in that, in the case of spacer protrusions (38, 39; 46..49) which are arranged, in an individually asymmetrical manner with respect to the centre lines (31, 32), on opposite side surfaces (11, 12, etc.), said protrusions lie on the same side of that centre line (31, 32) with respect to which they are arranged offset from the centre.

10. Set of structural elements according to one or more of Claims 1 to 5, characterized in that pairs of spacer protrusions (15, 16, etc.) which are respectively assigned to a side surface (11, 12, etc.) are arranged in the vicinity of (spaced apart from) the respective corners (24).

11. Set of structural elements according to Claim 10, characterized in that in each case two spacer protrusions (15, 16, etc.) of a side surface (11, 12, etc.) are arranged symmetrically with respect to the centre line (31, 32) thereof.

12. Set of structural elements according to one or more of Claims 1 to 11, characterized in that all the spacer protrusions (15, 16, etc.) have the same dimensions.

13. Set of structural elements according to Claim 7, characterized in that the individual spacer protrusions (34, 35) lie in an off-centre manner on the centre lines (31, 32) of the respective side surface (13, 14), in particular offset from the centre by less than half the width of the respective spacer protrusions (34, 35).

14. Set of structural elements according to Claim 13, characterized in that the width of the individual spacer protrusions (34, 35) is greater than the width (b), preferably double the width (2b), of the rest of the spacer protrusions (15, 16, etc.) which are arranged on the other side surfaces (11, 12).

## Revendications

1. Ensemble de construction constitué par des briques moulées (10) en forme de bloc, pour la construction d'un revêtement de terrain, dans lequel les briques moulées (10) sont réalisées de façon rectangulaire ou carrée en vue en plan et sont délimitées par quatre faces latérales (11, 12, 13, 14) perpendiculaires, dans lequel sur toutes les faces latérales (11, 12, 13, 14) sont agencées des excroissances d'écartement (15.. 20; 34, 35; 38, 39; 42.. 44; 46.. 49) dressées qui sont réalisées en forme de nervures et qui présentent une épaisseur (d) approximativement égale en tant que profondeur par rapport aux faces latérales (11, 12..) de sorte que toutes les excroissances d'écartement (15, 16..) font saillie sensiblement aussi loin par rapport aux faces latérales (11, 12..) et de sorte que chaque fois deux faces latérales (11, 12..) sont réalisées de façon concordante en ce qui concerne le nombre et la position relative des excroissances d'écartement (15, 16..), c'est-à-dire la distance de celles-ci par rapport à une ligne médiane imaginaire dressée de la face latérale (11, 12, 13, 14) respective, caractérisé en ce que
- la hauteur (h) des excroissances d'écartement (15, 16..) correspond approximativement à la hauteur de la brique moulée (10),
- deux premières faces latérales (11, 12..) sont réalisées de façon différente des deux autres faces latérales (11, 12..) en ce qui concerne le nombre et/ou la position relative des excroissances d'écartement (15, 16..),
- la position relative, le nombre et la largeur des excroissances d'écartement (15, 16..) des faces latérales (11, 12..) sont choisis de façon que les excroissances d'écartement (15, 16..) de deux faces latérales (11, 12..), réalisées de façon différente en ce qui concerne le nombre et la position relative des excroissances d'écartement (15, 16..), de deux briques moulées (10) contiguës ne se recouvrent pas l'une l'autre lorsque ces faces latérales (11, 12..) sont tournées l'une vers l'autre, de façon que les excroissances d'écartement (15, 16..) soient appliquées directement contre une face latérale (11, 12..) d'une brique moulée (10) contiguë,
- les excroissance d'écartement (15, 16..) sont en outre dimensionnées et agencées de façon qu'au moins un recouvrement partiel des excroissances d'écartement (15, 16..) des briques moulées (10) est réalisé lorsque des faces latérales (11, 12), de deux briques moulées (10) contiguës, réalisées de façon concordante en ce qui concerne le nombre et la position relative des excroissances d'écartement (15, 16..) se font face l'une l'autre de sorte que les excroissances d'écartement (15, 16..) des briques moulées (10) contiguës s'appuient l'une sur l'autre,
- de plus, les excroissances d'écartement (15, 16..) sont agencées de façon que dans un revêtement de terrain, soit seulement des faces latérales (11, 12..) réalisées de façon concordante sont tournées l'une vers l'autre en formant des joints plus larges (21) soit seulement des faces latérales (11, 12..) réalisées de façon différente sont tournées l'une vers l'autre en formant des joints plus étroits (53), et
- d'une part la largeur (b) des saillies d'écartement (15, 16..) et, d'autre part, les distances libres (a) entre deux saillies d'écartement (15, 16..) agencées sur la même face latérale (11, 12..) sont dimensionnées de façon que, lorsque des briques moulées (10) sont posées, des tronçons libres subsistent dans les joints étroits (53), entre des excroissances d'écartement (15, 16..) contiguës à l'intérieur du joint (53), lorsque des faces latérales (11, 12..), de briques moulées (10) contiguës, réalisées de façon différente en ce qui concerne le nombre et la position relative des excroissances d'écartement (15, 16..) sont tournées l'une vers l'autre.

2. Ensemble de construction suivant la revendication 1, caractérisé en ce que deux premières faces latérales (11, 12..) réalisées de façon concordante en ce qui concerne le nombre et la position relative des excroissances d'écartement (15, 16..) présentent chaque fois deux excroissances d'écartement (15, 16..) agencées à distance l'une de l'autre.

3. Ensemble de construction suivant la revendication 1 ou 2, caractérisé en ce que chaque fois deux faces latérales (11, 12 d'une part; 13, 14 d'autre part) attenantes "en équerre" sont réalisées de façon concordante en ce qui concerne le nombre et la position relative des excroissances d'écartement (15, 16..) et en ce que deux premières faces latérales (11, 12) attenantes "en équerre" présentent chaque fois deux excroissances d'écartement (15, 16..) agencées à distance l'une de l'autre.

4. Ensemble de construction suivant la revendication 3, caractérisé en ce que les deux autres faces latérales (13, 14) attenantes présentent chaque fois une saillie d'écartement (19, 20; 34, 35).

5. Ensemble de construction suivant l'une ou plusieurs des revendications 1 à 4, caractérisé en ce que les deux autres faces latérales (13, 14) attenantes présentent chaque fois une excroissance d'écartement (19, 20) agencée au milieu de la face latérale (13, 14).

6. Ensemble de construction suivant l'une ou plusieurs des revendications 1 à 3, caractérisé en ce que toutes les faces latérales (11, 12..) présentent le même nombre d'excroissances d'écartement (15, 16..).

7. Ensemble de construction suivant l'une ou plusieurs des revendications 1 à 4, caractérisé en ce que les excroissances d'écartement (34, 35; 38, 39; 46..49) séparées sont agencées de façon dissymétrique par rapport aux lignes médianes (31, 32) des faces latérales (11, 12..).

8. Ensemble de construction suivant la revendication 7, caractérisé en ce que les excroissances d'écartement (38, 39; 46..49) séparées sont agencées de façon latéralement décalée à côté des lignes médianes (31, 32) des faces latérales (11, 12..) correspondantes.

9. Ensemble de construction suivant la revendication 7 ou 8, caractérisé en ce que, dans le cas d'excroissances d'écartement (38, 39; 46..49) qui sont agencées séparément sur des faces latérales (11, 12..) opposées et dissymétriquement par rapport aux lignes médianes (31, 32), ces excroissances sont situées sur le même côté de cette ligne médiane (31, 32) par rapport à laquelle elles sont agencées de façon décalée en dehors du milieu.

10. Ensemble de construction suivant l'une ou plusieurs des revendications 1 à 5, caractérisé en ce que des paires, d'excroissances d'écartement (15, 16..), adjointes chaque fois à une face latérale (11, 12..) sont agencées à proximité (à distance) des coins (24) respectifs.

11. Ensemble de construction suivant la revendication 10, caractérisé en ce que chaque fois deux excroissances d'écartement (15, 16..) d'une face latérale (11, 12..) sont agencées de façon symétrique par rapport à la ligne médiane (31, 32) de cette dernière.

12. Ensemble de construction suivant l'une ou plusieurs des revendications 1 à 11, caractérisé en ce que toutes les excroissances d'écartement (15, 16..) présentent les mêmes dimensions.

13. Ensemble de construction suivant la revendication 7, caractérisé en ce que les excroissances d'écartement (34, 35) séparées sont situées en dehors du milieu, sur les lignes médianes (31, 32) des faces latérales (13, 14) respectives, en particulier avec un décalage par rapport au milieu de moins que la demi-largeur de l'excroissance d'écartement (34, 35) respective.

14. Ensemble suivant la revendication 13, caractérisé en ce que la largeur des excroissances d'écartement (34, 35) séparées est supérieure à la largeur (b) des excroissances d'écartement (15, 16..) restantes agencées sur les autres faces latérales (11, 12), et est de préférence deux fois aussi large (2b).
